# FASCICULE DE BREVET EUROPEEN

(11) **EP 1 462 282 B1**
(45) Date de publication et mention de la délivrance du brevet: **16.04.2008**
(21) Numéro de dépôt: 04006173.1
(22) Date de dépôt: 16.03.2004
(51) Int. Cl.: B60H 1/00

(54) **Dispositif de distribution d' air pour véhicule**
Vorrichtung zur Luftverteilung für ein Fahrzeug
Air distribution device for a vehicle

(30) Priorité: 28.03.2003 FR 0303889
(43) Date de publication de la demande: 29.09.2004
(73) Titulaire: VALEO SYSTEMES THERMIQUES, 78321 Le Mesnil St Denis Cedex (FR)
(72) Inventeur: Poitier, Gérard, 92230 Gennevilliers (FR); Almori, Armelle, 78310 Maurepas (FR)

(56) Documents cités:
- EP-A- 0 461 421
- DE-A- 3 805 168
- FR-A- 2 771 343

## Description

L'invention concerne un dispositif de distribution d'air, notamment pour une installation de chauffage/ventilation ou de climatisation de véhicule, comprenant un organe rotatif monté dans un boîtier de manière à permettre à l'air, selon sa position angulaire, de circuler soit dans un premier trajet entre une chambre amont et une première chambre aval, soit dans un second trajet entre ladite chambre amont et au moins une seconde chambre aval.

De tels dispositifs de distribution sont utilisés en particulier pour répartir un flux d'air entre le pare-brise d'un véhicule, alimenté par le premier trajet, et un ou plusieurs aérateurs débouchant dans l'habitacle, alimentés par le second trajet.

Le document EP 0 461 421, qui est considéré comme l'art antérieur le plus proche divulgue un dispositif du genre défini en introduction, l'organe rotatif comportant au moins une première cloison transversale traversée par son axe de rotation, une première cloison axiale et une seconde cloison axiale s'étendant toutes deux à partir de la première cloison transversale, de part et d'autre de celle-ci dans la direction axiale, la première cloison axiale libérant le premier trajet et la seconde cloison axiale coopérant avec le boîtier pour obturer le second trajet pour une première position angulaire de l'organe rotatif, la première cloison axiale coopérant avec le boîtier pour obturer le premier trajet et la seconde cloison axiale libérant le second trajet pour une seconde position angulaire, lesdites cloisons axiales se raccordant à la première cloison transversale selon deux lignes qui se croisent en délimitant dans ce dernier quatre régions.

Ce dispositif a pour inconvénient de générer une perte de charge importante.

Le document FR 2 771 343 divulgue un dispositif utilisant un organe rotatif dépourvu de cloison transversale, dans lequel la perte de charge est limitée.

Le but de l'invention est de réduire la perte de charge lorsque l'un ou l'autre des trajets est obturé par l'organe rotatif, et par conséquent de conserver le débit d'air dans le trajet restant ouvert, dans le cas d'un dispositif utilisant un organe rotatif pourvu d'au moins une première cloison transversale.

L'invention vise notamment un dispositif du genre défini en introduction, et prévoit que les premier et second trajets communiquent entre eux pour chacune desdites positions angulaires, en amont de la cloison axiale qui obture l'un d'eux, par au moins une ouverture commune ménagée dans l'une au moins desdites régions.

Ainsi, lorsque le premier trajet est obturé, l'air circule dans sa partie amont pour fournir un débit supplémentaire à la partie aval du second trajet, réduisant ainsi la perte de charge par rapport à une circulation d'air dans le seul second trajet, et inversement lorsque le second trajet est obturé.

Des caractéristiques optionnelles de l'invention, complémentaires ou de substitution, sont énoncées ci-après:
- L'organe rotatif comporte une seconde cloison transversale traversée par son axe de rotation et une troisième cloison axiale commandant un troisième trajet entre la chambre amont et une troisième chambre aval, la première cloison axiale et la troisième cloison axiale s'étendant toutes deux à partir de la seconde cloison transversale, de part et d'autre de celle-ci dans la direction axiale, la seconde cloison transversale présentant une ouverture analogue à celle de la première cloison transversale faisant communiquer de la même manière les premier et troisième trajets.
- Lesdits trajets s'étendent sensiblement parallèlement entre eux et perpendiculairement audit axe en étant décalés les uns par rapport aux autres dans la direction de celui-ci.
- Ladite ouverture s'étend sensiblement sur la totalité de ladite région.
- Une portion de la ou de chaque cloison transversale, située dans l'une au moins de ses régions adjacentes à celle présentant l'ouverture, est inclinée par rapport à l'axe.
- Ladite portion est inclinée de manière à faire saillie axialement en direction de la première cloison axiale.
- Ladite portion est inclinée sensiblement sous la forme d'une portion de cône ayant pour axe ledit axe de rotation.
- Ledites portions des deux cloisons transversales sont inclinées sensiblement sous la forme de portions de cônes respectifs dont les sommets sont sensiblement confondus.

Les caractéristiques et avantages de l'invention sont exposés plus en détail dans la description ci-après, avec référence aux dessins annexés.

La figure 1 est une représentation schématique d'un dispositif de distribution d'air selon l'invention, en coupe selon l'axe de rotation de l'organe rotatif, celui-ci étant dans sa première position angulaire.

La figure 2 est une vue en coupe selon la ligne II-II de la figure 1.

Les figures 3 et 4 sont des vues analogues aux figures 1 et 2 respectivement, l'organe rotatif étant dans sa seconde position angulaire.

La figure 5 est une vue en perspective d'un exemple de réalisation d'un organe rotatif pour un dispositif selon l'invention.

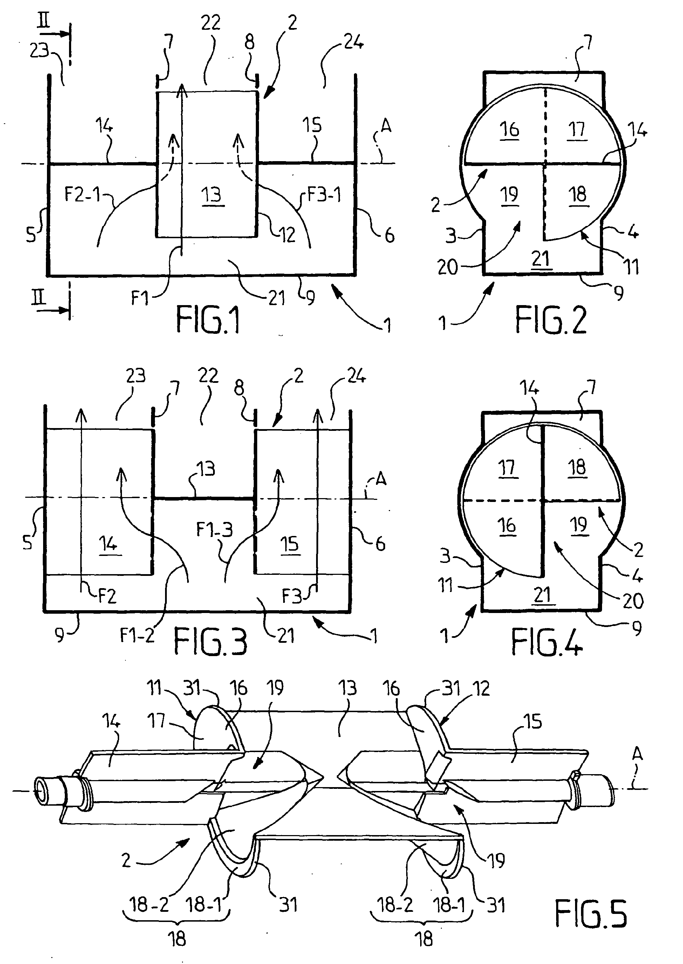

Le dispositif représenté sur les figures 1 à 4, destiné à être monté notamment à l'avant de l'habitacle d'un véhicule automobile, comprend un boîtier 1 et un organe rotatif 2 monté dans le boîtier de manière à tourner autour d'un axe horizontal A orienté transversalement par rapport au véhicule. L'organe rotatif 2 coopère avec différentes parois du boîtier 2 pour définir des trajets d'air. Il s'agit plus particulièrement d'une paroi 3 généralement verticale, s'étendant parallèlement à l'axe A et tournée vers l'avant du véhicule, d'une paroi 4 opposée à la paroi 3 et tournée par conséquent vers l'arrière du véhicule, ces deux parois étant reliées entre elles par une paroi d'extrémité gauche 5, une paroi d'extrémité droite 6, ainsi que deux cloisons intermédiaires 7, 8 s'étendant selon des plans perpendiculaires à l'axe A, seulement dans la partie supérieure de la hauteur des parois 3 et 4.

L'organe rotatif 2 comporte deux cloisons transversales 11, 12 représentés ici sous la forme de portions de disques circulaires situées dans les mêmes plans que les cloisons 7 et 8. Les cloisons 11 et 12 sont raccordées entre elles par une première cloison axiale 13 représentée ici comme s'étendant dans un plan contenant l'axe A. Deux autres cloisons axiales 14, 15, également représentées comme disposées dans un plan contenant l'axe A, s'étendent symétriquement l'un de l'autre, respectivement depuis la cloison 11 jusqu'au contact de la paroi 5 et depuis la cloison 12 jusqu'au contact de la paroi 6.

Comme on le voit sur les figures 2 et 4, les cloisons 13 et 14 se raccordent à la cloison 11, dans l'exemple présenté, selon des lignes mutuellement perpendiculaires qui partagent le disque de la cloison 11 en quatre secteurs, à savoir trois secteurs pleins 16, 17 et 18 et un secteur 19 dont toute la superficie est occupée par une ouverture. Des secteurs semblables aux secteurs 16 à 19 sont délimités, symétriquement à ceux-ci, sur la cloison 12 par les cloisons 13 et 15.

Le bord périphérique des secteurs 16 à 18 est en contact et sensiblement étanche à l'air avec les parois 3 et 4 et avec le bord inférieur de la cloison 7. De même, le bord périphérique des secteurs pleins de la cloison 12 sont en contact sensiblement étanche avec les parois 3 et 4 et le bord inférieur de la cloison 8. Les cloisons 11 et 12 délimitent donc entre eux, et entre les parois 3 et 4, un premier trajet d'air, indiqué par la flèche F1, entre une chambre aval 21, située au-dessous de l'organe rotatif 2 dans le boîtier 1, et une première chambre aval 22, délimitée par les cloisons 7 et 8. De même, les cloisons 11 et 12 délimitent avec les parois 5 et 6 respectivement des trajets d'air F2 et F3 entre la chambre amont 21 et des chambres aval respectives, à savoir une chambre 23 située entre la paroi 5 et la cloison 7 et une chambre 24 située entre la paroi 6 et la cloison 8. Le trajet F1 sert par exemple au dégivrage du pare-brise, et les trajets F2 et F3 à l'aération des moitiés gauche et droite de l'habitacle du véhicule. La chambre 21 est représentée comme étant limitée par une paroi inférieure 9 du boîtier.

On voit sur les figures que, dans la première position de l'organe rotatif représentée sur les figures 1 et 2, le la cloison 13 libère le trajet F1, tandis que les cloisons 14 et 15 obturent les trajets F2 et F3, et inversement dans la seconde position représentée sur les figures 3 et 4.

En outre, l'ouverture 20 de la cloison 11 permet à un flux d'air supplémentaire F2-1, dans la première position, de rejoindre le trajet F1 après avoir emprunté la partie du trajet F2 située en amont, c'est-à-dire au-dessous, de la cloison 14, et à un flux supplémentaire F1-2, dans la seconde position, de rejoindre le trajet F2 après avoir emprunté la partie du trajet F1 située en amont, c'est-à-dire au-dessous, de la cloison 13. Des flux F3-1 et F1-3, symétriques des précédents, circulent dans les mêmes conditions à travers le secteur évidé de la cloison 12.

Bien entendu, dans les positions intermédiaires de l'organe rotatif, le débit d'air est réparti dans des proportions variables entre le trajet F1 d'une part et les trajets F2 et F3 d'autre part.

La figure 5 illustre une forme de réalisation pratique de l'organe rotatif d'un dispositif de distribution d'air selon l'invention. Sur cette figure, les mêmes signes de référence que précédemment sont utilisés pour désigner des éléments analogues. En particulier, on retrouve deux cloisons transversales 11 et 12 décalées l'une par rapport à l'autre le long de l'axe de rotation A, une première cloison axiale 13 s'étendant sensiblement selon un plan, parallèlement à l'axe A, de l'une à l'autre des cloisons 11 et 12, et deux autres cloisons axiales 14, 15, s'étendant sensiblement selon un plan axial perpendiculaire à celui de la cloison 13, à partir des cloisons 11 et 12 respectivement en direction des extrémités opposées de l'organe 2.

Dans l'exemple de la figure 5, les secteurs 16 et 17 de chacun des cloisons 11 et 12 situés d'un même côté de la ligne de jonction avec la cloison 14 ou 15, et séparés l'un de l'autre par la ligne de jonction avec la cloison 13, s'étendent dans un plan perpendiculaire à l'axe A, jusqu'à un bord périphérique 31 en arc de cercle. Un autre secteur 19 est entièrement évidé. Enfin, le quatrième secteur 18 comprend une partie périphérique 18-1 s'étendant dans le même plan que les secteurs 16 et 17, adjacente au bord périphérique circulaire 31, et une partie intérieure 18-2 sensiblement en forme de portion de cône, les sommets des cônes des cloisons 11 et 12 étant sensiblement confondus, à mi-longueur axiale de l'organe 2.

L'invention n'est pas limitée aux modes de réalisation décrits et représentés. En particulier le nombre des trajets d'air commandés par l'organe rotatif peut être égal à 2 ou supérieur à 3. Les cloisons axiales ne s'étendent pas nécessairement dans des plans mutuellement perpendiculaires. Les cloisons transversales peuvent présenter au moins en partie des formes autre que planes et coniques. Une ouverture de communication entre deux trajets d'air peut occuper une partie seulement d'une région délimitée sur une cloison transversale par les cloisons axiales. Une telle ouverture ou plusieurs peuvent être ménagées dans plusieurs régions d'une même cloison transversale.

## Revendications

1. Dispositif de distribution d'air, notamment pour une installation de chauffage/ventilation ou de climatisation de véhicule, comprenant un organe rotatif (2) monté dans un boîtier (1) de manière à permettre à l'air, selon sa position angulaire, de circuler soit dans un premier trajet (F1) entre une chambre amont (21) et une première chambre aval (22), soit dans un second trajet (F2) entre ladite chambre amont (21) et au moins une seconde chambre aval (23), ledit organe rotatif comportant au moins une première cloison transversale (11) traversée par son axe de rotation (A), une première cloison axiale (13) et une seconde cloison axiale (14) s'étendant toutes deux à partir de la première cloison transversale (11), de part et d'autre de celle-ci dans la direction axiale, la première cloison axiale (13) libérant le premier trajet (F1) et la seconde cloison axiale (14) coopérant avec le boîtier (1) pour obturer le second trajet (F2) pour une première position angulaire de l'organe rotatif, la première cloison axiale (13) coopérant avec le boîtier (1) pour obturer le premier trajet (F1) et la seconde cloison axiale (14) libérant le second trajet (F2) pour une seconde position angulaire, lesdites cloisons axiales (13-14) se raccordant à la première cloison transversale selon deux lignes qui se croisent en délimitant dans ce dernier quatre régions (16-19), **caractérisé en ce que** les premier et second trajets (F1, F2) communiquent entre eux pour chacune desdites positions angulaires, en amont de la cloison axiale (13, 14) qui obture l'un d'eux, par au moins une ouverture commune (20) ménagée dans l'une au moins desdites régions.

2. Dispositif selon la revendication 1, dans lequel l'organe rotatif comporte une seconde cloison transversale (12) traversée par son axe de rotation (A) et une troisième cloison axiale (15) commandant un troisième trajet (F3) entre la chambre amont (21) et une troisième chambre aval (24), la première cloison axiale (13) et la troisième cloison axiale (15) s'étendant toutes deux à partir de la seconde cloison transversale (12), de part et d'autre de celle-ci dans la direction axiale, la seconde cloison transversale (12) présentant une ouverture analogue à celle de la première cloison transversale (11) faisant communiquer de la même manière les premier et troisième trajets (F1, F3).

3. Dispositif selon l'une des revendications 1 et 2, dans lequel lesdits trajets (F1-F3) s'étendent sensiblement parallèlement entre eux et perpendiculairement audit axe (A) en étant décalés les uns par rapport aux autres dans la direction de celui-ci.

4. Dispositif selon l'une des revendications précédentes, dans lequel ladite ouverture (20) s'étend sensiblement sur la totalité de ladite région (19).

5. Dispositif selon l'une des revendications précédentes, dans lequel une portion de la ou de chaque cloison transversale (11, 12), située dans l'une au moins (18) de ses régions adjacentes à celle (19) présentant l'ouverture (20), est inclinée par rapport à l'axe (A).

6. Dispositif selon la revendication 5, dans lequel ladite portion est inclinée de manière à faire saillie axialement en direction de la première cloison axiale (13).

7. Dispositif selon la revendication 4, dans lequel ladite portion est inclinée sensiblement sous la forme d'une portion de cône (18-2) ayant pour axe ledit axe de rotation (A).

8. Dispositif selon la revendication 7, rattachée à la revendication 2, dans lequel ledites portions des deux cloisons transversales (11-12) sont inclinées sensiblement sous la forme de portions de cônes respectifs (18-2) dont les sommets sont sensiblement confondus.

## Claims

1. Air distribution device, in particular for a vehicle heating/ventilating or air condition system, comprising a rotary unit (2) mounted inside a housing (1) such that, depending on the angular position thereof, the air is allowed to circulate, either in a first path (F1), between an upstream chamber (21) and a first downstream chamber (22), or in a second path (F2), between said upstream chamber (21) and at least one second downstream chamber (23), said rotary unit comprising at least one first transverse partition (11) through which the axis of rotation thereof passes(A), a first axial partition (13) and a second axial partition (14), both extending in the axial direction from the first transverse partition (11), on both sides thereof, the first axial partition (13) opening up the first path (F1) and the second axial partition (14) cooperating with the housing (1) to close off the second path (F2) for a first angular position of the rotary unit, the first axial partition (13) cooperating with the housing (1) to close off the first path (F1) and the second axial partition (14) opening up the second path (F2) for a second angular position, said axial partitions (13-14) being connected to the first transverse partition along two intersecting lines delimiting four regions (16-19) therein, **characterised in that**, for each of said angular positions, the first and second paths (F1, F2) connect with one another via at least one common opening (20) provided in at least one of said regions upstream from the axial partition (13, 14) which closes off one of them.

2. Device of claim 1, in which the rotary unit comprises a second transverse partition (12) through which the axis of rotation (A) thereof passes, and a third axial partition (15) controlling a third path (F3) between the upstream chamber (21) and a third upstream chamber (24), the first axial partition (13) and the third axial partition (15) both extending in the axial direction from the second transverse partition (12), on both sides thereof, the second transverse partition (12) having an opening similar to that of the first transverse partition (11) thus interconnecting the first and third paths (F1, F3) in the same way.

3. Device as claimed in one of claims 1 and 2, in which said paths (F1-F3) extend substantially parallel to one another and perpendicularly to said axis (A), while being offset in relation to one another in the direction thereof.

4. Device as claimed in any of the preceding claims, in which said opening (2) extends substantially over all of said region (19).

5. Device as claimed in any of the preceding claims, in which a portion of the or each transverse partition (11, 12)situated in at least one (18) of the regions thereof adjacent to the one (19) having the opening (20), is inclined in relation to the axis (A).

6. Device of claim 5, in which said portion is inclined so as to protrude axially in the direction of the first axial partition (13).

7. Device of claim 4, in which said portion is inclined substantially in the form of a cone portion (18-2) having for the axis thereof said axis of rotation (A).

8. Device of claim 7, dependent on claim 2, in which said portions of the two transverse partitions (11-12) are inclined substantially in the form of respective cone portions (18-2) the apexes of which are substantially coincident.

## Patentansprüche

1. Luftverteilungsvorrichtung, insbesondere für Heiz-/ Lüftungs- oder Klimaanlagen von Fahrzeugen, mit einem Drehelement (2), das so in einem Gehäuse (1) angebracht ist, dass es die Luft je nach Winkelstellung entweder auf einem ersten Weg (F1) zwischen einer vorgelagerten Kammer (21) und einer ersten nachgelagerten Kammer (22), oder auf einem zweiten Weg (F2) zwischen der besagten vorgelagerten Kammer (21) und zumindest einer zweiten nachgelagerten Kammer (23) zirkulieren lässt, wobei das besagte Drehelement zumindest eine erste radial verlaufende Trennwand (11) aufweist, durch die seine Rotationsachse (A) verläuft, sowie eine erste axial verlaufende Trennwand (13) und eine zweite axial verlaufende Trennwand (14), die beiderseits der ersten radial verlaufenden Trennwand (11) in die jeweils entgegen gesetzte axiale Richtung verlaufen, wobei in einer ersten Winkelstellung des Drehelements die erste axial verlaufende Trennwand (13) den ersten Weg (F1) freigibt, und die zweite axial verlaufende Trennwand (14) gemeinsam mit dem Gehäuse (1) den zweiten Weg (F2) verschließt, in einer zweiten Winkelstellung des Drehelements die erste axial verlaufende Trennwand (13) gemeinsam mit dem Gehäuse (1) den ersten Weg (F1) verschließt, und die zweite axial verlaufende Trennwand (14) den zweiten Weg (F2) freigibt, wobei die besagten axial verlaufenden Trennwände (13-14) durch zwei sich kreuzende Linien mit der ersten radial verlaufenden Trennwand verbunden sind, und in Letzterem vier Zonen (16-19) bilden, **dadurch gekennzeichnet, dass** der erste und der zweite Weg (F1, F2) in jeder der besagten Winkelstellungen vor der axialen Trennwand (13, 14), die einen von ihnen verschließt, durch zumindest eine gemeinsame Öffnung (20) miteinander verbunden sind, die in zumindest einer der besagten Zonen angeordnet ist.

2. Vorrichtung nach Anspruch 1, bei der das Drehelement eine zweite radial verlaufende Trennwand (12) aufweist, durch die seine Rotationsachse (A) verläuft, und eine dritte axial verlaufende Trennwand (15) zur Bildung eines dritten Weges (F3) zwischen der vorgelagerten Kammer (21) und einer dritten nachgelagerten Kammer (24), wobei die erste axial verlaufende Trennwand (13) und die dritte axial verlaufende Trennwand (15) beiderseits der zweiten radial verlaufenden Trennwand (12) in die jeweils entgegen gesetzte axiale Richtung verlaufen, und die zweite radial verlaufende Trennwand (12) eine Öffnung entsprechend jener der ersten radial verlaufenden Trennwand (11) aufweist, die auf dieselbe Art und Weise den ersten mit dem dritten Weg (F1, F3) verbindet.

3. Vorrichtung nach einem der Ansprüche 1 und 2, bei der die besagten Wege (F1-F3) im Wesentlichen parallel zueinander und senkrecht zur besagten Achse (A) verlaufen, wobei sie in der Achsrichtung zueinander versetzt angeordnet sind.

4. Vorrichtung nach einem der vorhergehenden Ansprüche, bei der sich die besagte Öffnung (20) im Wesentlichen über die gesamte Zone (19) erstreckt.

5. Vorrichtung nach einem der vorhergehenden Ansprüche, bei der ein Abschnitt der oder jeder radial verlaufenden Trennwand (11, 12), der sich zumindest in einer (18) seiner Zonen befindet, die an die Zone (19) mit der Öffnung (20) angrenzen, im Verhältnis zur Achse (A) geneigt ist.

6. Vorrichtung nach Anspruch 5, bei der der besagte Abschnitt so geneigt ist, dass er axial in Richtung der ersten axial verlaufenden Trennwand (13) übersteht.

7. Vorrichtung nach Anspruch 4, bei der der besagte Abschnitt im Wesentlichen in der Form eines konischen Abschnitts (18-2) geneigt ist, dessen Achse die besagte Rotationsachse (A) ist.

8. Vorrichtung nach Anspruch 7, in Verbindung mit Anspruch 2, bei der die besagten Abschnitte der beiden radial verlaufenden Trennwände (11-12) im Wesentlichen in der Form von jeweils konischen Abschnitten (18-2) geneigt sind, deren Scheitel im Wesentlichen gleich sind.
